# EUROPÄISCHE PATENTSCHRIFT

(11) **EP 2 260 785 B1**
(45) Veröffentlichungstag und Bekanntmachung des Hinweises auf die Patenterteilung: **25.04.2018**
(21) Anmeldenummer: 10182545.3
(22) Anmeldetag: 25.11.2005
(51) Int. Cl.: A61C 1/00, A61C 19/00

(54) **Einrichtung zur Versorgung eines medizinischen bzw. zahnmedizinischen Arbeitsplatzes mit flüssigen Betriebsstoffen**
Appliance for supplying a medical, in particular a dental-medical work place with operating liquids
Dispositif pour l' alimentation en liquides d'un poste de travail médical, en particulier dentaire

(30) Priorität: 02.12.2004 DE 102004058240
(43) Veröffentlichungstag der Anmeldung: 15.12.2010
(62) Teilanmeldung aus: 05025804.5
(73) Patentinhaber: Kaltenbach & Voigt GmbH, 88400 Biberach (DE)
(72) Erfinder: Grimm, Michael, 89597 Munderkingen (DE); Wenger, Georg, 88433 Schemmerhofen (DE); Mößlang, Hubert, 89610 Oberdischingen (DE); Eberle, Jörg, 88441 Mittelbiberach (DE); Bauer, Helmut, 88454 Unteressendorf (DE)
(74) Vertreter: Thun, Clemens

(56) Entgegenhaltungen:
- DE-A1- 4 338 622
- US-A- 3 757 421

## Beschreibung

Die vorliegende Erfindung betrifft eine Einrichtung, welche zur Versorgung eines medizinischen, insbesondere eines zahnmedizinischen Arbeitsplatzes mit flüssigen Betriebsstoffen vorgesehen ist.

An ärztlichen oder zahnärztlichen Behandlungsplätzen ist das Einhalten hygienischer Vorschriften unerlässlich, um das Infektionsrisiko für Patienten, den behandelnden Arzt oder weitere Personen möglichst gering zu halten. Auch zur Werterhaltung der verwendeten Behandlungsgeräte ist es zwingend erforderlich, verschiedene Betriebsstoffe bereitzustellen, die dem Personal eine regelmäßige Reinigung, Pflege oder Desinfektion des Arbeitsplatzes bzw. der einzelnen Geräte und Komponenten ermöglichen. Vornehmlich werden diese Betriebsstoffe in flüssiger Darreichungsform bereitgestellt.

An einem zahnmedizinischen Arbeitsplatz kommen bspw. unterschiedlichste Betriebsstoffe oder Flüssigkeiten zum Einsatz, welche u.a. zum Einhalten der Hygienevorschriften erforderlich sind. Hierbei handelt es sich zum einem um Mittel zur Entkeimung des Brauchwassers sowie zur Keimfreihaltung der Wasserwege sowie um Mundwasser, welches dem Mundspülwasser zudosiert werden kann. Weitere Pflegemittel sind zur Reinigung und Pflege der Absaugschläuche, Siebe, Amalgamabscheider und dergleichen vorgesehen und erfordern eine regelmäßige Anwendung, um diese sensiblen Bereiche des Arbeitsplatzes in einem hygienisch einwandfreien Zustand zu halten. Schließlich müssen auch die Oberflächen des Arbeitsplatzes wiederholt gereinigt oder desinfiziert werden, was wiederum mit Hilfe eines weiteren Reinigungs- und Desinfektionsmittels erfolgt.

Gemäß der bisherigen Praxis benutzt das zuständige Personal für die tägliche Arbeit am zahnärztlichen Arbeitsplatz also verschiedenste Mittel, die in der Regel an unterschiedlichsten Stellen platziert sind. Bspw. sind die Vorratsbehälter für das Absauganlagen-Pflege- und Desinfektions-Mittel üblicherweise unter dem Waschbecken bzw. dem Spültisch oder in einem separaten Raum angeordnet, während hingegen sich das Wasserentkeimungsmittel unmittelbar in der Behandlungseinheit befindet. Pflegemittel zur Oberflächendesinfektion sowie zur Polsterpflege wiederum befinden sich bspw. auf der Arbeitsfläche der Praxismöbel während hingegen ein Mundwasser zur Spülwasseraufbereitung in einem weiteren Schrank angeordnet ist. Diese verteilte Anordnung der verschiedenen Betriebsmittel ist einer der Hauptgründe dafür, dass sich die wiederholt durchzuführenden Reinigungen der verschiedenen Komponenten des Arbeitsplatzes aufwendig gestalten und hierdurch die Einhaltung der Hygienevorschriften erschwert ist.

Aus der DE 43 38 622 A1 ist eine Einrichtung zur Versorgung zahnärztlicher Instrumente mit verschiedenen Behandlungsflüssigkeiten bekannt. Die Einrichtung umfasst zwei Behälter mit Zusatzflüssigkeiten. Über eine Pumpe kann aus einem der Behälter die betreffende Zusatzflüssigkeit einem zahnärztlichen Instrument zugeführt werden.

Aus der US 3,757,421 ist eine zahnärztliche Vorrichtung bekannt, mit der einem zahnärztlichen Handstück mithilfe von Schaltern und Ventilen aus einem von mehreren Behältern eine Flüssigkeit zugeführt werden kann.

Der vorliegenden Erfindung liegt dementsprechend die Aufgabe zugrunde, eine Möglichkeit anzugeben, die an einem medizinischen oder zahnmedizinischen Arbeitsplatz zu verwendenden Betriebsstoffe in einfacher Weise den Vorschriften entsprechend nutzen zu können.

Die Aufgabe wird durch eine Versorgungseinrichtung mit den Merkmalen des Anspruchs 1 gelöst. Vorteilhafte Weiterbildungen der Erfindung sind Gegenstand der Unteransprüche.

Kerngedanke der vorliegenden Erfindung ist es, die verschiedenen flüssigen Betriebsstoffe räumlich, organisatorisch und logistisch zusammenzufassen, wobei die Handhabung der verschiedenen Stoffe dadurch erleichtert wird, dass diese weitestgehend automatisiert zur Verfügung gestellt werden.

Gemäß Anspruch 1 wird dementsprechend eine Versorgungseinrichtung für einen medizinischen, insbesondere einen zahnmedizinischen Arbeitsplatz vorgeschlagen, die mindestens zwei Vorratsbehälter mit flüssigen Betriebsstoffen aufweist, die zur Verwendung an dem Arbeitsplatz vorgesehen sind, wobei die Versorgungseinrichtung ferner Entnahmemittel und Zuführungsmittel zur Entnahme der Betriebsstoffe aus den Vorratsbehältern und zur Bereitstellung an Bedarfsorten des Arbeitsplatzes aufweist.

Durch die zentralisierte Lagerung der Betriebsstoffe sowie das automatisierte Zurverfügungsstellen dieser wird die Nutzung der verschiedenen Reinigungs-, Pflege- und Desinfektionsmittel für die Reinigungs- und Pflegearbeiten deutlich vereinfacht. Für das Personal ist es nunmehr nicht mehr erforderlich, unterschiedliche Orte aufzusuchen, um die verschiedenen Mittel zu entnehmen. Stattdessen wird durch die logistische Zusammenfassung der Betriebsstoffe eine deutliche Vereinfachung des Arbeitsablaufes erzielt. Ferner kann mittels vorteilhafter Weiterbildungen der Erfindung auch sichergestellt werden, dass die benötigten Mittel jederzeit in ausreichender Menge zur Verfügung stehen. Hierfür geeignete Entnahmevorrichtungen oder Sensoren werden später noch ausführlich erläutert.

Die erfindungsgemäße Versorgungseinrichtung zur Versorgung mit flüssigen Betriebsstoffen, die später auch als sog. Fluid-Center bezeichnet wird, kann sowohl einem einzelnen Arbeitsplatz zugeordnet sein, als auch zur zentralisierten Versorgung mehrerer Arbeitsplätze verwendet werden. Für eine derartige Erweiterung ist lediglich erforderlich, die Entnahme- und Zuführungsmittel entsprechend auszugestalten, um sicherzustellen, dass das gewünschte Fluid bzw. Betriebsmittel auch an dem Bedarfsort des entsprechenden Arbeitsplatzes zur Verfügung gestellt wird.

Weiterbildungen der vorliegenden Erfindung betreffen insbesondere spezielle Ausgestaltungen der verschiedenen Komponenten des Fluid-Centers.

Je nach Betriebsmittel, das zur Verfügung gestellt werden soll, können unterschiedlichste Maßnahmen vorgesehen sein, die eine ordnungsgemäße, hygienisch einwandfreie und zuverlässige Entnahme des Betriebsmittels aus dem Vorratsbehälter gewährleisten. Eine besondere Rolle hierbei spielen Maßnahmen, durch die sichergestellt ist, dass ausschließlich das vorgesehene Betriebsmittel dem entsprechenden Bedarfsort zugeführt wird. Da sich bspw. die unbeabsichtigte Zumischung eines Desinfektionsmittels zum Mundspülwasser fatal auswirken könnte, muss sichergestellt sein, dass die verschiedenen Komponenten des Arbeitsplatzes auch tatsächlich nur mit den hierfür geeigneten Mitteln versorgt werden können.

Gemäß einer vorteilhaften Weiterbildung der vorliegenden Erfindung sind dementsprechend spezielle Kupplungselemente zum Anschließen der Vorratsbehälter vorgesehen, wobei jedem Vorratsbehälter-Typ ein individuelles Kupplungselement zugeordnet ist, welches ausschließlich das Anschließen des richtigen Vorratsbehälters ermöglicht. Weitere Maßnahmen in diese Richtung können darin bestehen, spezielle Sensoren einzurichten, welche das in dem Vorratsbehälter befindliche Mittel eindeutig identifizieren. Hierdurch könnte bspw. auch das fehlerhafte Nachfüllen von Nichtoriginal-Betriebsstoffen in die benutzten Vorratsbehälter unterbunden werden, da die Sensoren erkennen, ob die für das System vorgesehenen Stoffe verwendet werden oder nicht.

Andere Weiterbildungen der Erfindung betreffen Maßnahmen, durch welche eine zuverlässige und sichere Entnahme der Betriebsstoffe aus den Vorratsbehältern sichergestellt ist. So kann vorgesehen sein, dass die Vorratsbehälter einen mit dem zugehörigen Kupplungselement verbindbaren Saugschlauch aufweisen, der insbesondere mit seinem dem Kupplungselement abgewandten Ende am Boden des Vorratsbehälters angeordnet und dessen Ende vorzugsweise wellig oder schräg ausgestaltet ist. Das Kupplungselement zum Anschließen an den Vorratsbehälter kann beispielsweise ein federndes Dichtelement, bspw. einen Mikrofaltenbalg aufweisen, wobei das Kupplungselement gemäß einem bevorzugten Ausführungsbeispiel der vorliegenden Erfindung schwenkbar oder federnd gelagert ist. Hierdurch wird der Austausch eines Vorratsbehälters und das Anschließen an die Entnahmemittel besonders einfach gestaltet.

Handelt es sich bei dem Betriebsstoff, der von der erfindungsgemäßen Versorgungseinrichtung zur Verfügung gestellt wird, um ein Mittel zur Entkeimung des Brauchwassers sowie zur Keimfreihaltung der Wasserwege, so ist vorzugsweise vorgesehen, dass dieses Mittel nicht unmittelbar in die entsprechenden Wasserwege überführt sondern zunächst von dem Vorratsbehälter in einen Zwischenbehälter geleitet wird. Hierbei kann ein Sensor vorgesehen sein, der automatisch für eine Wiederbefüllung des Zwischenbehälters sorgt, sobald die sich in dem Behälter befindende Menge unterhalb eines Mindestmaß gefallen ist. Der Zwischenbehälter ist dabei vorzugsweise auf einem geostatisch hohen Niveau angeordnet, durch welches eine für die zuverlässige Reinigung erforderliche genaue Dosierung des Mittels sichergestellt ist.

Bei einem anderen Betriebsstoff der von der erfindungsgemäßen Versorgungseinrichtung zur Verfügung gestellt wird, kann es sich um ein Mittel zur Flächendesinfektion handeln. Hierbei bestehen die Zuführungsmittel vorzugsweise aus einem Druckschlauch, an dessen Ende eine Sprühdüse - bspw. in Form eines Handstücks - sowie ein Betätigungselement zum Aktivieren der Sprühdose angeordnet sind. In dem Druckschlauch ist dann eine Pumpe zur Druckbeaufschlagung vorgesehen, so dass das Personal für den Fall, dass ein Element des Arbeitsplatzes zu reinigen ist, in einfacher Weise auf die Sprühdüse zurückgreifen und mittels des Betätigungselements das Desinfektionsmittel aufsprühen kann.

Eine weitere Komponente, die Bestandteil des erfindungsgemäßen Fluid-Centers sein kann, betrifft das Reinigen von Schläuchen des Arbeitsplatzes. Hierzu kann eine Anschlusseinrichtung zum Anschließen von zu reinigenden Schläuchen vorgesehen sein, wobei über die Anschlusseinrichtung Wasser und/oder ein Pflegemittel zur Verfügung gestellt wird. Hierbei besteht zum einen die Möglichkeit, das Pflegemittel dem Wasser über einen Saugschlauch dauerhaft zuzumischen, es kann allerdings auch vorgesehen sein, dass das Pflegemittel dem Wasser wahlweise zumischbar ist oder auch unabhängig von dem Wasser durch die Schläuche gepumpt werden kann.

Hierfür können bspw. bestimmte Ventilanordnungen oder dergleichen innerhalb der Versorgungsleitungen vorgesehen sein.

Schließlich kann das erfindungsgemäße Fluid-Center auch zur automatisierten Zudosierung von Mundwasser zum Mundspülwasser verwendet werden. Wiederum sind hierbei Maßnahmen vorgesehen, welche zum einen die zuverlässige Entnahme des Mundwassers aus dem Vorratsbehälter sicherstellen und zum anderen ermöglichen, dass der Vorratsbehälter in einfacher und schneller Weise ausgetauscht werden kann.

Insgesamt wird somit eine Einrichtung geschaffen, durch welche die verschiedenen Handlungsabläufe an einem medizinischen oder zahnmedizinischen Arbeitsplatz, die mit dem Einsatz von flüssigen Betriebsstoffen verbunden sind, deutlich vereinfacht werden. Hierdurch ist zum Einen ein hoher Qualitätsstandard gewährleistet, zum Anderen wird das zuverlässige Einhalten der hygienischen Anforderungen ermöglicht.

Nachfolgend soll die Erfindung anhand der beiliegenden Zeichnung näher erläutert werden. Es zeigen:
- Fig. 1: ein Schema einer erfindungsgemäßen Versorgungseinrichtung, welches die verschiedenen Komponenten der Versorgungseinrichtung zeigt;
- Fig. 2a und 2b: unterschiedliche Möglichkeiten zur Zuordnung einer erfindungsgemäßen Versorgungseinrichtung zu einem einzelnen Arbeitsplatz;
- Fig. 3: die Möglichkeit der Versorgung mehrerer Arbeitsplätze durch eine einzige erfindungsgemäße Versorgungseinrichtung;
- Fig. 4: schematisch die Anordnung einer erfindungsgemäßen Versorgungseinrichtung innerhalb einer einzelnen Behandlungseinheit eines zahnmedizinischen Arbeitsplatzes;
- Fig. 5: ein zu Fig. 4 vergleichbares Schema, wobei allerdings nunmehr mehrere Behandlungseinheiten von einer einzigen Versorgungseinrichtung versorgt werden;
- Fig. 6: ein Ausführungsbeispiel für bei der Versorgungseinrichtung zum Einsatz kommende Zuführungsmittel und Kupplungselemente;
- Fig. 7: ein Schema zur Verdeutlichung der Vorgehensweise beim Austausch eines Vorratsbehälters;
- Fig. 8a und 8b: vergrößerte Darstellungen zum Anschließen eines Kupplungselements an den Vorratsbehälter;
- Fig. 9: die verschiedenen Komponenten der Zuführungsmittel bei dem Ausführungsbeispiel in Fig. 6;
- Fig. 10: die Gesamtanordnung der Zuführungsmittel des ersten Ausführungsbeispiels;
- Fig. 11a und 11b: ein erstes Ausführungsbeispiel einer Einheit zur Pflege für Absaugschläuche eines medizinischen Arbeitsplatzes;
- Fig. 12a und 12b: ein zweites Ausführungsbeispiel einer derartigen Einheit;
- Fig. 13: ein drittes Ausführungsbeispiel einer derartigen Einheit;
- Fig. 14: eine weitere Einheit der Versorgungseinrichtung zur Zudosierung von Mundwasser zum Mundspülwasser;
- Fig. 15: die Ausgestaltung eines Anschlusselements für die in Fig. 14 dargestellte Einheit;
- Fig. 16: die Funktionsweise der Anschlusseinheit bei unterschiedlichen Vorratsbehältergrößen und
- Fig. 17: eine Halterung für ein Anschlusselement in Aufsicht.

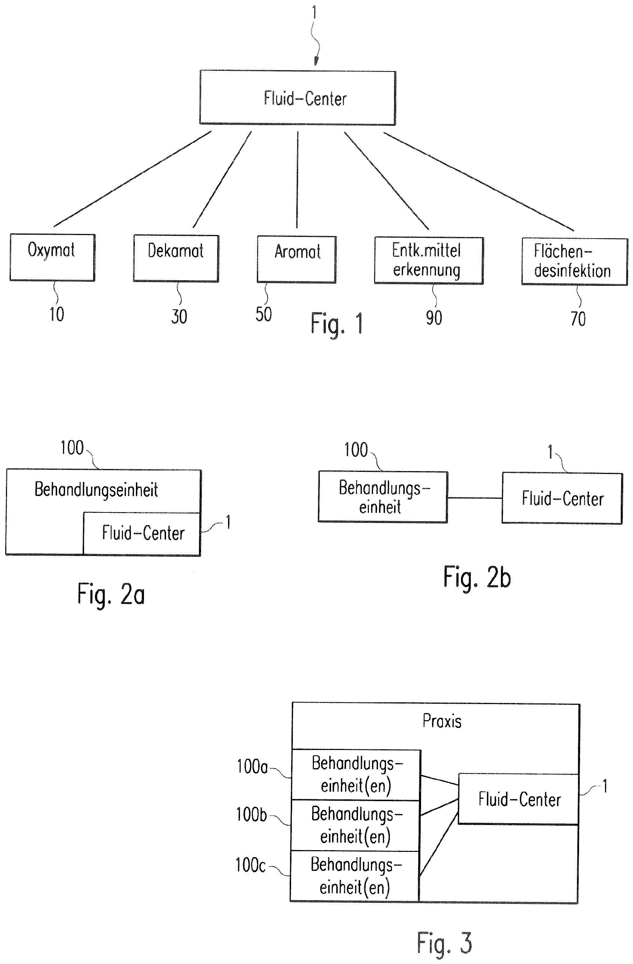

Fig. 1 zeigt zunächst allgemein eine mit dem Bezugszeichen 1 bezeichnete erfindungsgemäße Vorrichtung, die zur Versorgung eines medizinischen bzw. zahnmedizinischen Arbeitsplatzes mit flüssigen Betriebsstoffen vorgesehen ist. Entsprechend der schematischen Darstellung in Fig. 1 besteht das erfindungsgemäße Fluid-Center 1 aus vier verschiedenen sog. Versorgungs-Komponenten bzw.

Einheiten 10, 30, 50 und 70, die zur Bereitstellung von vier verschiedenen flüssigen Betriebsstoffen vorgesehen sind, sowie aus einer weiteren Komponente 90, welche durch Überwachungsmaßnahmen die Bereitstellung des jeweils richtigen Betriebsstoffes sicherstellt.

Bei der ersten Versorgungs-Komponente 10 handelt es sich um eine Einrichtung, die zur Entkeimung des Brauchwassers sowie zur Keimfreihaltung der Wasserwege vorgesehen ist. Aufgabe der zweiten Versorgungs-Komponente 30 ist es, ein Reinigungsmittel zum Reinigen und Pflegen von Absaugschläuchen, Sieben, Amalgamabscheidern und dergleichen zur Verfügung zu stellen. Die dritte Versorgungs-Komponente 50 ermöglicht das zuverlässige Zudosieren von Mundwasser zum Mundspülwasser, die vierte Versorgungs-Komponente 70 stellt ein Desinfektionsmittel zur Verfügung, welches zur Reinigung und Desinfektion von Oberflächen des Arbeitsplatzes verwendet werden kann. Die letzte Komponente 90 ist nicht unmittelbar dazu vorgesehen, ein Fluid zur Verfügung zu stellen, sie stellt allerdings sicher, dass lediglich die gewünschten Mittel zum Einsatz kommen bzw. zur Verfügung gestellt werden. Insbesondere soll mit Hilfe dieser letzten Komponente 90, die eine automatische Erkennung und Identifizierung der flüssigen Betriebsstoffe ermöglicht, sichergestellt werden, dass an den verschiedenen Bedarfsorten des Arbeitsplatzes nicht versehentlich falsche Betriebsstoffe zum Einsatz kommen.

Anzumerken ist, dass die dargestellte Ausgestaltung des erfindungsgemäßen Fluid-Centers 1 speziell auf die Anwendung an einem zahnärztlichen Arbeitsplatz gerichtet wurde. Selbstverständlich allerdings kann die erfindungsgemäße Versorgungseinrichtung auch bei anderen medizinischen Arbeitsplätzen Verwendung finden, wobei dann ggf. andere Einrichtungen zum Einsatz kommen oder andere Betriebsmittel zur Verfügung gestellt werden. Gemeinsam ist allerdings, dass die Versorgungs-Komponenten des Fluid-Centers eine weitestgehend automatisierte Entnahme der Betriebsstoffe aus den zugehörigen Vorratsbehältern ermöglichen und die Betriebsstoffe bei Bedarf an den gewünschten Orten zur Verfügung stellen.

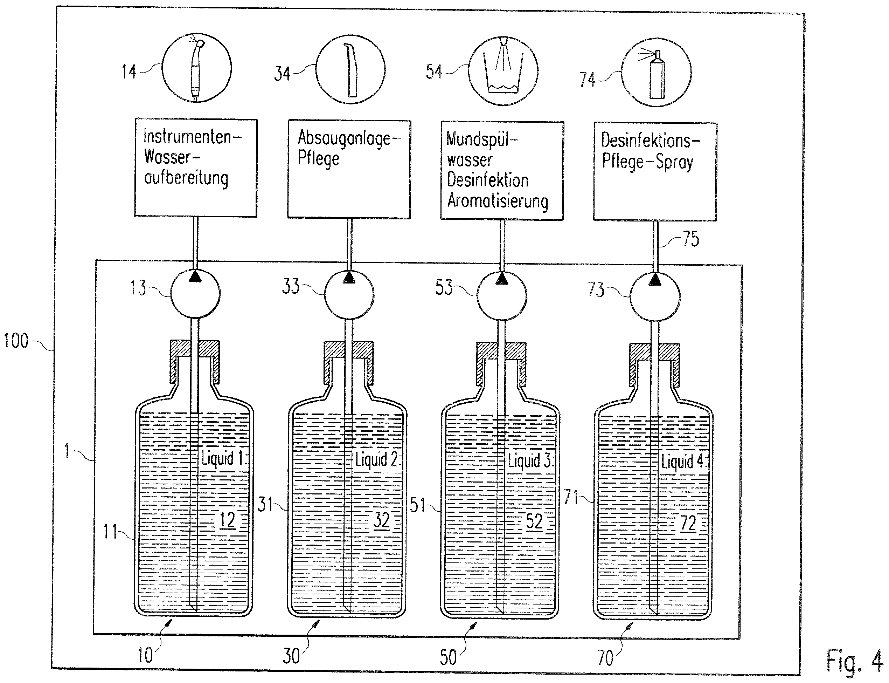

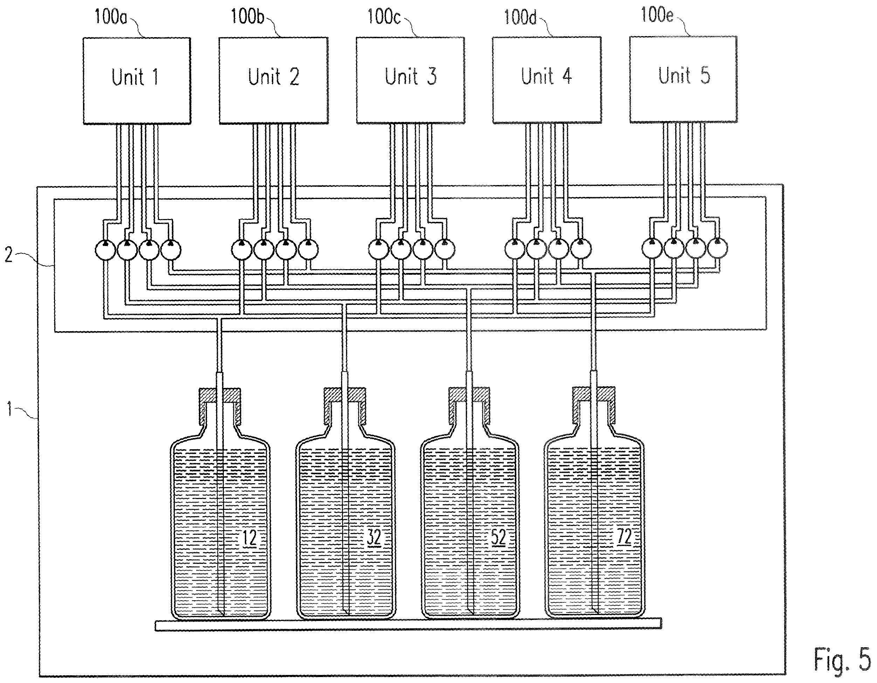

Die verschiedenen Systemkomponenten 10, 30, 50, 70 und 90 der Versorgungseinrichtung sind weitestgehend automatisch gesteuert und können dezentral in den Geräten oder zentral in einem dafür geeigneten separaten Raum der Praxis angeordnet sein. Es besteht also die Möglichkeit, das erfindungsgemäße Fluid-Center 1 zur individuellen Versorgung einer einzelnen Behandlungseinheit 100 einzusetzen, wie dies in den Fig. 2a und 2b dargestellt ist (bei dem Ausführungsbeispiel von Fig. 2a ist das erfindungsgemäße Fluid-Center 1 in die Behandlungseinheit 100 integriert, während hingegen bei dem Ausführungsbeispiel von Fig. 2b das Fluid-Center 1 eine zu der Behandlungseinheit 100 getrennte Einrichtung darstellt). Auf der anderen Seite wäre es allerdings auch denkbar, das Fluid-Center 1 zur gleichzeitigen Versorgung mehrerer Behandlungseinheiten einzusetzen. Dieser Fall ist in Fig. 3 dargestellt, bei dem ein Fluid-Center 1 innerhalb eines zentralen Praxisraums zur Versorgung von drei verschiedenen Behandlungseinheiten 100a, 100b und 100c vorgesehen ist. In diesem Fall ist eine Erweiterung der Zuführungsmittel für die flüssigen Betriebsstoffe erforderlich ist, wie den Fig. 4 und 5 entnommen werden kann.

Fig. 4 zeigt nochmals schematisch die Anordnung einer Versorgungseinrichtung 1, die nicht Teil der Erfindung ist, innerhalb einer einzigen Behandlungseinheit 100 eines zahnärztlichen Arbeitsplatzes. Wie bereits zuvor erläutert wurde, besteht die Vorrichtung 1 aus vier Versorgungs-Komponenten 10, 30, 50 und 70, die jeweils einen entsprechenden Vorratsbehälter 11, 31, 51 bzw. 71 mit einem darin befindlichen flüssigen Betriebsstoff 12, 32, 52 bzw. 72 aufweisen. Über lediglich schematisch dargestellte Entnahme- und Zuführungsmittel 13, 33, 53 und 73 werden dann die verschiedenen Betriebsstoffe entsprechenden Abnehmern zugeführt, bei denen es sich bspw. um ein Instrument 14 zur Abgabe von Wasser, eine Absauganlage 34 zur Pflege von Schläuchen, eine Einrichtung zur Bereitstellung von Mundspülwasser 54 oder um eine Einrichtung zur Abgabe eines Desinfektions- oder Pflegesprays 74 handeln kann.

Bei dem Beispiel, das nicht Teil der Erfindung ist, in Fig. 4, bei dem das Fluid-Center 1 einer einzelnen Behandlungseinheit 100 zugeordnet ist, führen die Zuführungsmittel 13, 33, 53 und 73 unmittelbar zu den entsprechenden Abnehmern 14, 34, 54, 74. Bei dem Ausführungsbeispiel in Fig. 5 hingegen, bei dem die erfindungsgemäße Versorgungseinheit 1 zur Versorgung von insgesamt fünf Behandlungseinheiten 100a bis 100e vorgesehen ist, muss zusätzlich Sorge dafür getragen werden, dass die Betriebsmittel jeweils an der gerade das entsprechende Betriebsmittel benötigenden Behandlungseinheit 100a bis 100e zur Verfügung stehen. Dementsprechend ist bei dieser Variante noch ein Verteilungs-/Steuerblock 2 vorgesehen, der für die Verteilung der verschiedenen Flüssigkeiten 12, 32, 52 und 72 an die Behandlungseinheiten 100a bis 100e verantwortlich ist.

Aufgabe der Versorgungs-Einheiten 10, 30, 50 und 70 des Fluid-Centers 1 ist es, die entsprechenden Betriebsstoffe zuverlässig und in gewünschter Menge dem entsprechenden Verbraucher bzw. Abnehmer zuzuführen. Da die Art der Verabreichung bzw. des Einsatzes der Betriebsstoffe unterschiedlich ist, wurde dies bei den verschiedenen Versorgungs-Einheiten entsprechend berücksichtigt. Nachfolgend sollen nunmehr die Ausgestaltungen und Eigenschaften der vier verschiedenen Versorgungs-Einheiten 10, 30, 50 und 70 näher erläutert werden.

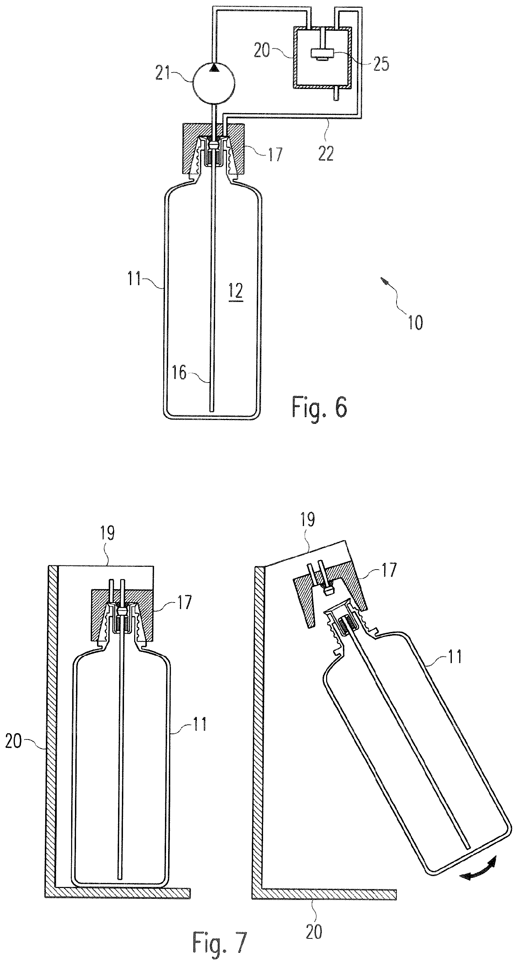

Zunächst zeigen die Fig. 6 bis 10 die erste Versorgungs-Einheit 10, welche für die Zurverfügungsstellung eines Desinfektionsmittels zur Entkeimung des Brauchwassers sowie zur Keimfreiheit der Wasserwege verantwortlich ist. Wesentlich hierbei ist, dass die Zudosierung des Mittels 12 mit hoher Genauigkeit erfolgt und sichergestellt ist, dass jederzeit eine ausreichende Menge des Mittels zur Verfügung steht. Des Weiteren soll der Vorratsbehälter 11 für das Betriebsmittel 12 leicht austauschbar sein.

Wesentliche Komponenten der ersten Versorgungs-Einheit 10 sind dementsprechend Anschlusselemente zum Anschließen des Vorratsbehälters 11 sowie Entnahmemittel und Zuführungsmittel, welche das Medium 12 dem Vorratsbehälter entnehmen und in gewünschter Weise und genauer Dosierung an einen Abnehmer übermitteln.

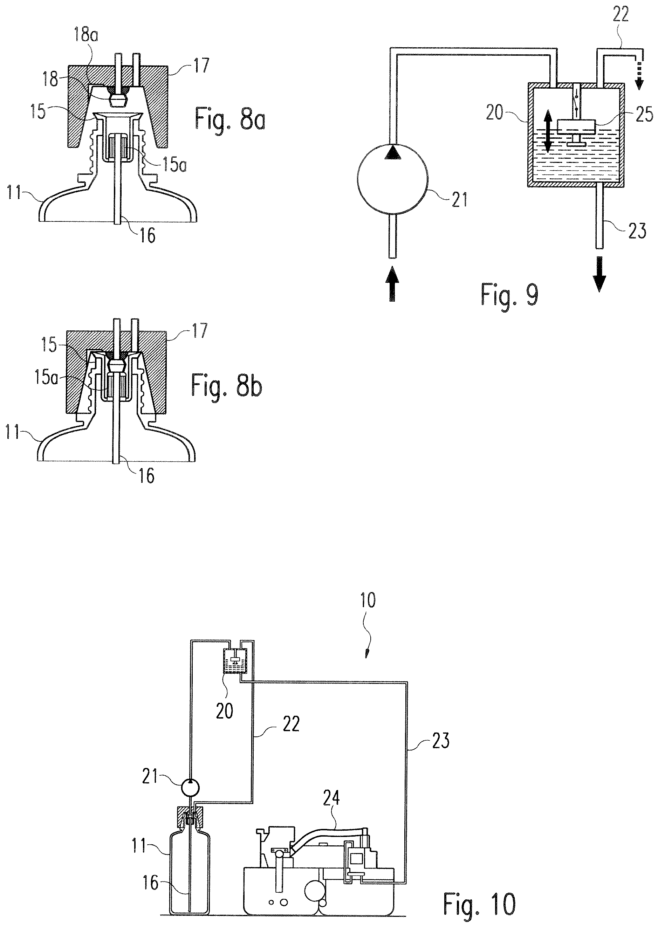

Zunächst sollen die Anschlusselemente und Entnahmemittel erläutert werden, die insbesondere den Darstellungen in den Fig. 8a und 8b entnommen werden können. Wesentlich Merkmal ist zunächst, dass der Ausgießer 15 des Vorratsbehälters 11, der zur Entgasungsfunktion benötigt wird, zusätzlich mit einem dünnen Saugschlauch 16 versehen ist, welcher mit dem einen offenen Ende am Pilz 15a des Ausgießers 15 endet und dessen anderes Ende am Boden des Vorratsbehälters 11 an der tiefsten Stelle angeordnet ist, wie z.B. der Darstellung in Fig. 6 entnommen werden kann. Der Saugschlauch 16 ist an seinem unteren Ende vorzugsweise wellig oder schräg angeschnitten, wodurch sichergestellt ist, dass der Schlauch 16 nicht durch Anliegen an der Wand oder Bodenseite des Vorratsbehälters 11 dicht wird.

Der Anschlussadapter 17 enthält ein federndes Dichtelement 18, welches zum sicheren Abdichten des Sauganschlusses am Ausgießer-Pilz 15a des Vorratsbehälters 11 vorgesehen ist. Wie der Darstellung in Fig. 7 entnommen werden kann, ist der Adapter 17 an einer entsprechenden Halterung 19, die Bestandteil einer Aufnahmevorrichtung 20 für den Vorratsbehälter 11 ist, schwenkbar gelagert und federnd adaptiert, um ein leichtes Austauschen des Vorratsbehälters 11 zu ermöglichen. Der Druckausgleich beim Absaugen des Mittels 12 aus dem Vorratsbehälter 11 sowie die mögliche Entgasung des Desinfektionsmittels 12 erfolgt über eine Kerbe 18a im Anschlussadapter 17, der mit einem (nicht dargestellten) Entgasungselement versehen werden kann.

Um eine gleichmäßige und dauerhafte Zuführung des Desinfektionsmittels 12 zu den Wasserwegen des Arbeitsplatzes zu ermöglichen, ist vorgesehen, dass das Mittel 12 nicht unmittelbar aus dem Vorratsbehälter 11 an die Bedarfsorte übermittelt wird. Stattdessen ist ein Zwischenbehälter 20 vorgesehen, in den das Desinfektionsmittel 12 aus dem Vorratsbehälter 11 mittels einer kleinen Pumpe 21, insbesondere einer Schwingankerpumpe überführt wird. Der Zwischenbehälter 20, der ebenfalls entlüftet werden muss und hierzu über einen Verbindungsschlauch 22 mit dem Anschlussadapter 17 verbunden ist, stellt sicher, dass während einer Behandlung bei leerem Vorratsbehälter 11 noch genügend Reserve vorhanden ist, damit der Arbeitstag nicht durch eine zwischenzeitliche Unterbrechung durch Nachfüllen gestört wird. Eine weitere Funktion des Zwischenbehälters 20 besteht darin, dass er bei einer Intensiventkeimung als Vorrat dient und sicherstellt, dass genügend Desinfektionsmittel 12 vorhanden ist, so dass die Intensiventkeimung wie gewohnt automatisch ohne Nachfüllunterbrechung durchgeführt werden kann. Der Verbindungsschlauch 22 zwischen dem Zwischenbehälter 20 und dem Vorratsbehälter 11 dient neben der Entlüftung ferner auch dazu, ein Überfüllen des Zwischenbehälters 20 bei Funktionsstörung auszuschließen.

Der Zwischenbehälter 20 wird auf einem geostatisch hohen Niveau angeordnet, damit er quasi drucklos das Desinfektionsmittel 12 dem Wasser zumischen kann. Hierzu ist eine Verbindungsleitung 23 vorgesehen, die zu einer Pumpe 24 zur Förderung des Wassers führt. Da der vom Füllstand abhängige Druckunterschied im Zwischenbehälter 20 minimal ist, ist durch diese bevorzugte Ausgestaltung und Anordnung der verschiedenen Komponenten der ersten Versorgungs-Einheit 10 sichergestellt, dass eine präzise Zudosierung des Desinfektionsmittels 12 immer gegeben ist.

Über einen in Fig. 9 dargestellten und die Pumpe 21 ansteuernden Fühlstandsensor 25 ist ferner sichergestellt, dass der Zwischenbehälter 20 automatisch befüllt wird, sobald eine vorgegebenen Mindestmenge an Desinfektionsmittel 12 unterschritten wurde. Ferner kann der Sensor 25 auch als Leeranzeige für den Vorratsbehälter 11 genutzt werden, da durch den Sensor 25 überprüft wird, ob die Anzeige nach einer gewissen Pumpzeit der Pumpe 21 von leer auf voll übergegangen ist. Wurde diese Zeit hingegen überschritten, so kann davon ausgegangen werden, dass der Vorratsbehälter 11 leer ist. In diesem Fall könnte ein geeignetes Signal ausgegeben werden, welches das Personal zu einem Wechsel des Vorratsbehälters 11 veranlasst.

Es wäre allerdings auch denkbar, zur Überwachung des Füllstands des Vorratsbehälters einen separaten Sensor zu verwenden. Beispielsweise wäre die Nutzung von Sensoren möglich, welche den Füllstand mittels einer Gewichtsbestimmung, über eine Lichtschranke oder auf induktive Weise bestimmen. Auch über Druck- oder Unterdruckschalter im Druck- oder Saugschlauch könnte überwacht werden, ob der Vorratsbehälter nachgefüllt werden soll.

Die Vorteile der Ausgestaltung der ersten Versorgungs-Einheit 10 bestehen darin, dass ein einfaches Beschicken der Einrichtung mit Desinfektionsmittel durch einen Austausch des Vorratsbehälters ermöglicht ist. Insbesondere ist der Anschlussadapter derart gestaltet, dass ein einfaches Anstecken des Behälters an die Anschluß- und Entnahmemittel ausreicht. Darüber hinaus sind die Zuführungswege und der Zwischenbehälter derart ausgestaltet, dass eine konstante und genaue Zudosierung des Desinfektionsmittels sichergestellt ist. Ferner kann mit Hilfe des Fühlstandsensors auf einfache Weise die Leerung des Vorratsbehälters erkannt werden.

Anzumerken ist ferner, dass die Ausgestaltung des Vorratsbehälters 11 im vorliegenden Fall bewußt derart gewählt wurde, dass der Behälter 11 auch zum Nachfüllen von Desinfektionsmittel in bislang verwendeten Versorgungsgeräten genutzt werden kann. So erlaubt der Ausgießer 15 auch ein manuelles Auffüllen anderer Geräte, wodurch die Vielseitigkeit des erfindungsgemäßen Systems weiter verbessert wird.

Die zweite Versorgungs-Komponente des erfindungsgemäßen Fluid-Centers betrifft die Bereitstellung eines Reinigungs- und Pflegemittels zur Reinigung von Absaugschläuchen und weiteren Funktionskomponenten eines zahnmedizinischen Arbeitsplatzes wie z.B. Sieben, Amalganabscheidern, Separierungen, Absperrventilen und dergleichen. Durch eine regelmäßige Reinigung dieser Komponenten soll insbesondere eine Biofilmbildung vermieden werden.

Zur Vermeidung der Biofilmbildung muss das Absaugsystem in der Regel täglich nach Behandlungsende gepflegt und gereinigt werden. Hierzu wird durch die Absaugschläuche eine Kombination aus Wasser, Reinigungs- und Desinfektionsmittel geführt. Bislang wurde diese Prozedur in der Regel manuell unter Verwendung von Dosier- und Mischbehältern durchgeführt, wobei es zwingend erforderlich war, den genauen Handlungsablauf korrekt einzuhalten, da nur in diesen Fällen eine zuverlässige Reinigung des Systems erzielt werden konnte.

Die erfindungsgemäße zweite Versorgungs-Komponente 30 des Fluid-Centers ermöglicht nunmehr eine weitestgehend automatisierte Reinigung der Systemkomponenten. Das Prinzip beruht dabei auf einem Tube-wash-System, welches bereits in einem gewissen Umfang in zahnärztlichen Praxen zum Einsatz kommt. Hierbei werden die Absaugschläuche und Amalgamabscheider eines zahnärztlichen Arbeitsplatzes nach Behandlungen mit hohem Schmutz- und Blutanfall programmgesteuert mit klarem Wasser gespült und gereinigt. Ferner werden Zapfstellen zur Verfügung gestellt, über welche durch Saughandstücke Wasserpfropfen mit hoher Dynamik gespült werden. Auch hierdurch kann eine Reinigung der Schläuche erreicht werden.

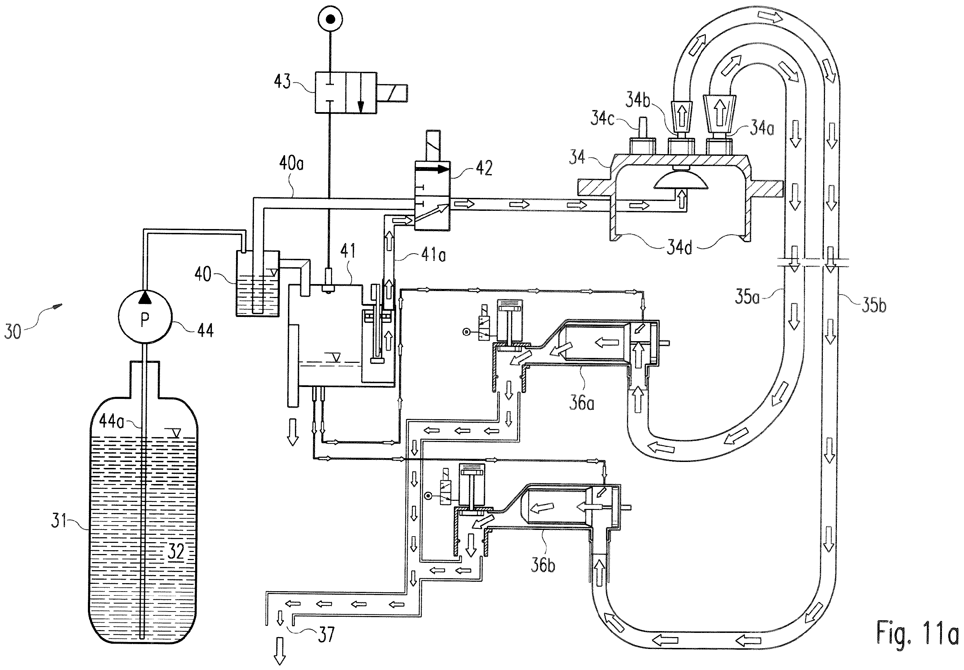

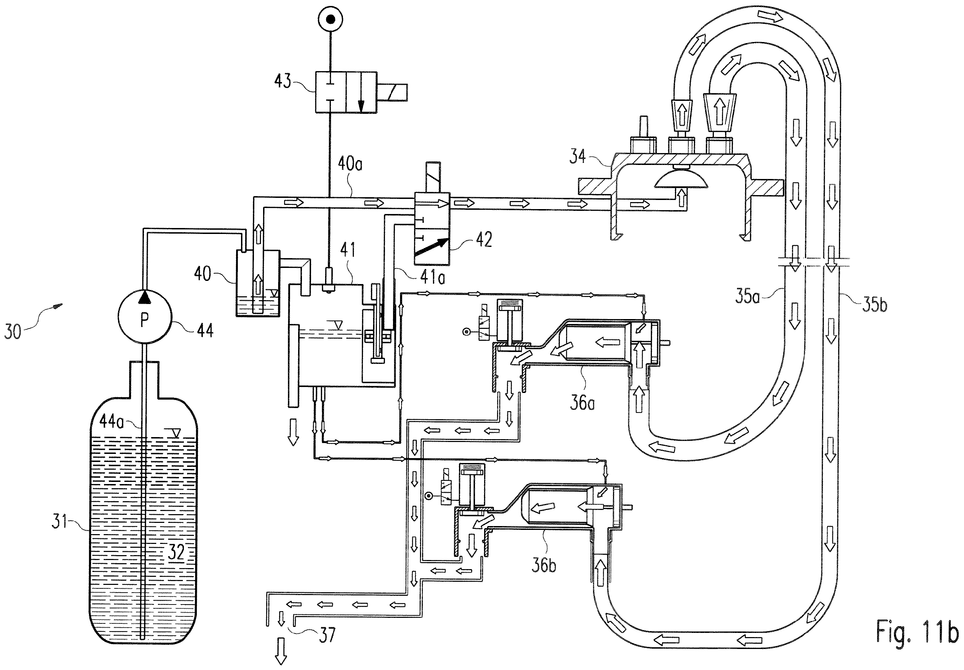

Aufgabe der zweiten Versorgungs-Komponente 30 des erfindungsgemäßen Fluid-Centers ist es nun, die zur Reinigung der oben genannten Komponenten verwendeten Flüssigkeiten, also insbesondere Wasser sowie ein geeignetes Reinigungsmittel in automatisierter Weise zur Verfügung zu stellen. Eine erste Variante einer entsprechend ausgestalteten Versorgungs-Einheit 30 ist in den Fig. 11a und 11b dargestellt.

Hierbei ist zunächst eine Pumpe 44 vorgesehen, die über einen Saugschlauch 44a aus dem Vorratsbehälter 31 ein Desinfektions- und Pflegemittel 32 in einen Zwischenbehälter 40 pumpt. Der Zwischenbehälter 40 liegt dabei auf einem höheren Niveau als ein Wasserreservoir 41, welches mit Hilfe eines Versorgungsventils 43 permanent aus einem größeren Wasservorrat befüllt wird. Aus dem Wasserreservoir 41 und dem Zwischenbehälter 40 können nun die entsprechenden Flüssigkeiten zur Reinigung von Schläuchen abgesaugt werden. Ein geeignetes Ventil 42 wird hierzu so angesteuert, dass zum einen aus dem Zwischenbehälter 40 oder zum anderen aus dem Wasserbehälter 41 Flüssigkeit abgesaugt wird. Alternativ zu dem dargestellten 3/2-Wegeventil 42 könnten auch zwei parallel geschaltete 2/2-Wegeventile eingesetzt werden, wobei in diesem Fall dann auch die Möglichkeit bestehen würde, gleichzeitig Wasser und Pflegemittel 32 abzusaugen. Durch geeignete Querschnitte der Saugleitungen 40a und 41a können in diesem Fall definierte Mischverhältnisse zwischen beiden Flüssigkeiten erzeugt werden.

Die über das Ventil 42 zur Verfügung gestellte Flüssigkeit wird an eine Zapfstelle 34 weitergeleitet, welche verschiedene Anschlüsse 34a bis 34c für zu reinigende Schläuche 35a und 35b aufweist. Die Zapfstelle kann an dem Arbeitsplatz abnehmbar gestaltet sein, was im dargestellten Ausführungsbeispiel mittels zweier seitlichen Klemmen 34d erzielt wird. Es wäre allerdings auch denkbar, die Zapfstelle 34 fest an einem Arbeitsplatz anzuordnen.

Soll nunmehr ein Schlauch 35a bzw. 35b des zahnärztlichen Arbeitsplatzes gereinigt werden, so muss dieser lediglich auf die entsprechende Steckkupplung 34a bis 34c der Zapfstelle 34 aufgesteckt werden. Mittels der entsprechenden Saugleistung wird dann die über das Ventil 42 zur Verfügung gestellte Flüssigkeit - also entweder Wasser, Reinigungs- oder Pflegemittel 32 bzw. eine Mischung beider Flüssigkeiten - abgesaugt, wobei die Schläuche 35a, 35b gereinigt werden. Nach Durchlaufen der entsprechenden Sperrventile 36a, 36b für die Schläuche 35a, 35b können dann die Flüssigkeiten über einen Abfluss 37 abgegeben werden.

Das Auffüllen des Zwischenbehälters 40 erfolgt in regelmäßigen Zeitabständen, wobei hierzu die Pumpe 44 über eine festgelegte Zeitdauer aktiviert wird. Bei der Pumpe 44 kann es sich insbesondere um eine Schlauch- oder Membranpumpe handeln. Da eine derartige Pumpe ein konstantes Fördervolumen aufweist, ist diese Methode für den vorliegenden Einsatzfall ausreichend genau.

Ist allerdings der Vorratsbehälter 31 leer gepumpt, so wird die Pumpe 44 lediglich Luft fördern, was zur Folge hat, dass ihre Drehzahl ansteigt. Durch Abgreifen der Drehzahl mittels einer geeigneten Logikschaltung kann somit die Entleerung des Vorratsbehälters 31 erkannt und mittels einem audiovisuellen Signal dem Personal vermittelt werden. Dieses wird hierdurch dazu veranlasst, den Pflegemittelbehälter 31 auszutauschen bzw. wieder aufzufüllen.

Insgesamt wird somit die Möglichkeit geschaffen, die Schläuche 35a, 35b eines Arbeitsplatzes weitestgehend automatisiert mit den gewünschten Reinigungsflüssigkeiten zu durchspülen. Gleichzeitig ist sichergestellt, dass jeweils ausreichend Reinigungsmittel 32 zur Verfügung steht und in der richtigen Dosierung verabreicht wird. Fig. 11a zeigt den Fall dafür, dass mittels des Ventils 42 Wasser durch die Schläuche 35a bzw. 35b gepumpt wird, während hingegen Fig. 11b das Reinigen der Schläuche mit dem in dem Zwischenbehälter 40 befindlichen Reinigungsmittel zeigt.

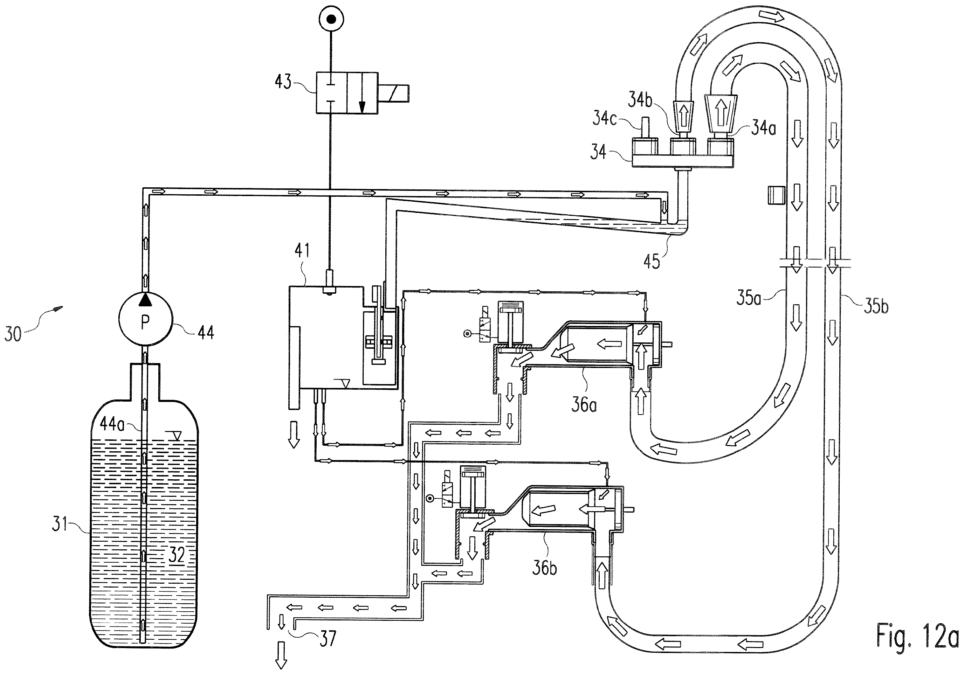

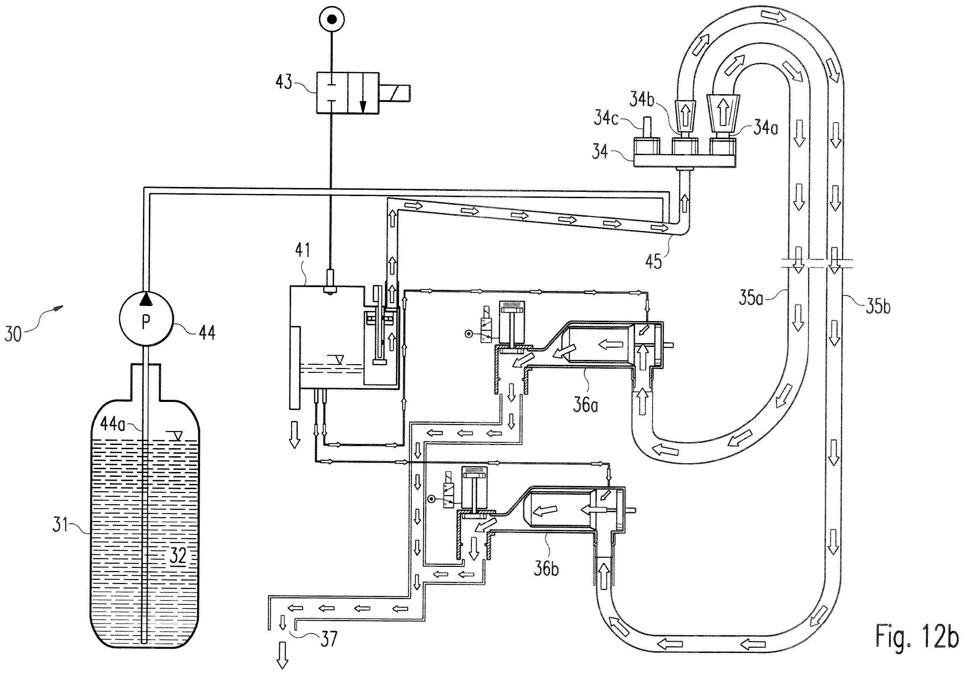

Eine zweite Variante der in den Fig. 11a und 11b dargestellten zweiten Versorgungs-Einheit 30 ist in den Fig. 12a und 12b dargestellt, wobei gleiche Komponenten mit den gleichen Bezugszeichen versehen wurden. Der Aufbau dieser zweiten Variante ist sehr ähnlich zu dem Ausführungsbeispiel in den Fig. 11a und 11b, allerdings wird nunmehr auf ein Ventil zum selektiven Zuführen des Wassers oder des Reinigungsmittels verzichtet. Stattdessen fördert die Pumpe 44 die Reinigungsflüssigkeit in ein Zwischenreservoir, welches unmittelbar in Verbindung mit der Zapfstelle 34 steht und im dargestellten Ausführungsbeispiel als Schlauchsiphon 45 verwirklicht ist. Voraussetzung für die Funktionsweise dieser zweiten Variante ist, dass die Pumpe 44 drucksicher ausgestaltet ist, was z.B. bei Schlauch- oder Membranpumpen der Fall ist.

Mittels der dargestellten Anordnung lassen sich nunmehr unterschiedliche Betriebszustände verwirklichen. Bspw. kann vorgesehen sein, dass die Pumpe das Pflegemittelkonzentrat 32 in die Spüleinheit, genauer genommen in das Siffon 45 liefert und gleichzeitig Wasser zugeführt wird, so dass letztendlich ein Gemisch aus beiden Flüssigkeiten durch die zu reinigenden Schläuche 35a und 35b gesaugt wird. Wird hingegen das Pflegemittel 32 in das Siffon bzw. Zwischenreservoir 45 gefördert, während keine Absaugung durch die Schläuche 35a und 35b erfolgt, so wird beim anschließenden Absaugen zunächst ausschließlich das Pflegemittel 32 eingesaugt werden, wie dies in Fig. 12a gezeigt ist. Es kann somit eine besonders effektive und verstärkte Reinigung der Schläuche 35a, 35b durchgeführt werden. Wird die Pumpe 44 schließlich deaktiviert, so wird entsprechend der Darstellung in Fig. 12b ausschließlich Wasser aus dem Vorratsbehälter 41 abgesaugt. Da die Pumpe 44 in diesem Fall wie ein Absperrorgan wirkt, ist sichergestellt, dass kein Reinigungsmittel 32 in die Schläuche 35a, 35b gelangt.

Mit Hilfe der zweiten Variante lassen sich also auf sehr einfache Weise unterschiedlichste Reinigungsprozeduren durchführen, wofür ausschließlich eine geeignete Ansteuerung der Pumpe 44 erforderlich ist.

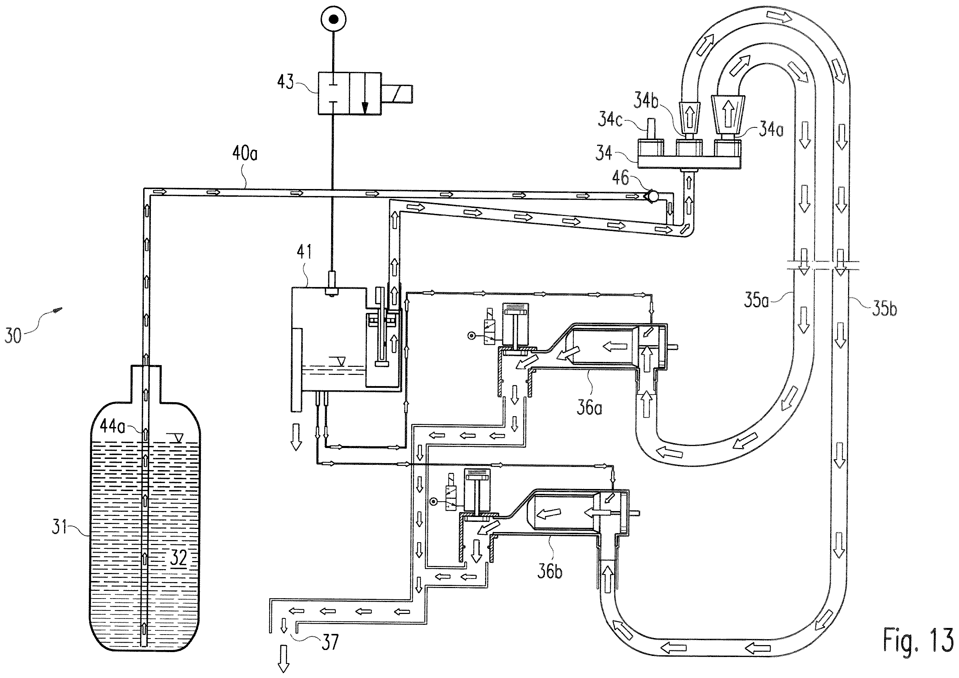

Fig. 13 schließlich zeigt eine besonders einfache dritte Variante, bei der dauerhaft Wasser und gleichzeitig auch Reinigungsmittel 32 durch die Schläuche 35a und 35b gefördert wird. In diesem Fall wird auf eine Pumpe verzichtet und stattdessen die Zuführungsleitung 40a für das Reinigungsmittel 32 unmittelbar mit der Saugleitung 44a verbunden, so dass bei Anschluss eines Schlauchs 35a bzw. 35b an die Zapfstelle 34 automatisch auch Reinigungsmittel 32 abgesaugt wird. Ein in der Zuführungsleitung 40a vorgesehenes Rückschlagventil 46 sorgt dafür, dass nicht versehentlich Wasser in den Vorratsbehälter 31 gelangt. Mittels eines (nicht dargestellten) zusätzlichen Ventils in der Förderleitung 41a für das Reinigungsmittel 32 könnte ferner auch eine gezielte Zugabe des Mittels 32 erzielt werden.

Insgesamt gesehen gestattet es somit die zweite Versorgungs-Komponente 30 des Fluid-Centers, zur Reinigung von Schläuchen vorgesehene Flüssigkeiten in zuverlässiger Weise und geeigneter Menge zur Verfügung zu stellen. Gleichzeitig können Maßnahmen getroffen werden, die sicherstellen, dass jederzeit eine ausreichende Menge des benötigten Reinigungsmittels zur Verfügung steht.

Anzumerken ist ferner, dass die Anschlußmittel der zweiten Versorgungs-Komponente 30 analog zu denjenigen der ersten Versorgungs-Komponente 10 ausgestaltet sein können, um einen einfachen Austausch der Vorratsbehälter zu ermöglichen.

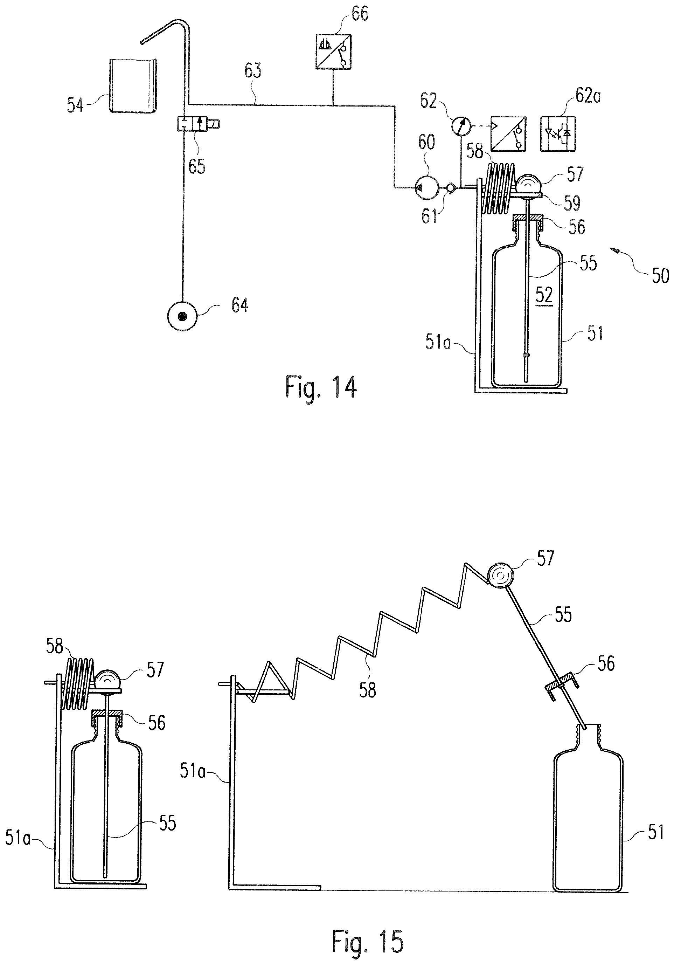

Die dritte Versorgungs-Komponente des erfindungsgemäßen Fluid-Centers ist in den Fig. 14 bis 17 dargestellt. Es handelt sich hierbei um eine Einrichtung zur Dosierung von Mundwasser an einem zahnärztlichen Behandlungsplatz. Bislang erfolgte die Verabreichung derartiger Mundwasserprodukte lediglich manuell, wobei eine Helferin von Hand dem Patienten die richtige Menge des Mundwassers bzw. eines Mundwasser-Antiseptikums zur Verfügung stellen musste. Die dritte Komponente des erfindungsgemäßen Fluid-Centers stellt nun eine Einrichtung dar, mit der die Verabreichung derartiger Mittel automatisiert erfolgt. Hierbei soll allerdings die Möglichkeit gegeben sein, verschiedenste Originalflaschen zu verwenden, da dem Nutzer des Systems die Freiheit gelassen werden soll, zu entscheiden, welches Produkt er verwendet. Aus hygienischen Gründen ist ferner eine getrennte Medienführung bis zum Mundglas wünschenswert, wobei insbesondere auch die Möglichkeit bestehen sollte, das Mittel in einem beliebigen Verhältnis mit Wasser zu mischen.

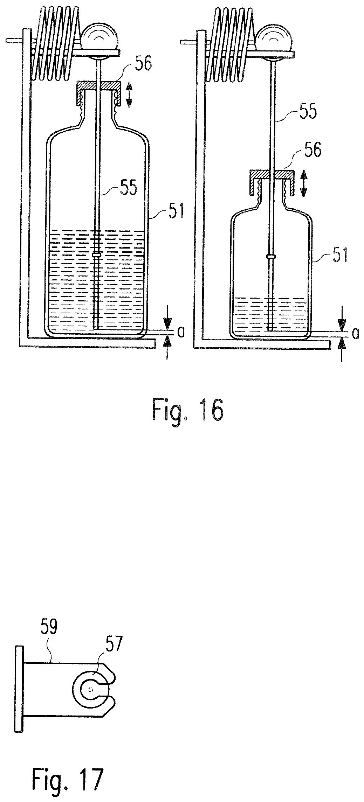

Die in den Fig. 14 bis 17 dargestellte dritte Komponente 50 des Fluid-Centers ermöglicht die Lösung dieser unterschiedlichen Aufgaben dadurch, dass in den Vorratsbehälter 51 für das Mundwasser 52, der in einer Lagerung 51a gehalten ist, eine Saugsonde 55 eingeführt wird, über welche das Mundwasser 52 abgesaugt werden kann. Die Anordnung ist dabei derart ausgeführt, dass das untere Ende der Saugsonde 55 vom Boden des Vorratsbehälters 51 immer den gleichen Abstand a aufweist, wie dies in Fig. 16 dargestellt ist. Wie der Darstellung ferner entnommen werden kann, wird durch diese Maßnahme erreicht, dass unabhängig von der Größe des Vorratsbehälters 51 bzw. dessen Form konstante Einbau- bzw. Handhabungsbedingungen vorliegen. Um ferner eine sichere Abdeckung des Vorratsbehälters 51 zu ermöglichen, ist vorgesehen, dass auf der Saugsonde 55 bewegbar gelagert eine Abdeckung 56 angeordnet ist, die unabhängig von der Größe des Vorratsbehälters 51 auf dessen obere Öffnung aufgebracht werden kann.

Die Saugsonde 55 ist über ein ergonomisch geformtes Griffelement 57 in einer Aufhängung 59 arretiert, die in Aufsicht in Fig. 17 dargestellt ist. Innerhalb des Griffelements 57 ist eine Mediendurchführung realisiert, so dass die Sonde 55 mit einem weiterführenden flexiblen Spiralschlauch 58 verbunden ist und gleichzeitig eine Umlenkung erfolgt. Wie der Darstellung in Fig. 15 entnommen werden kann, ist aufgrund der flexiblen Gestaltung des Spiralschlauchs 58 eine hohe Bewegungsfreiheit gegeben, welche einen bequemen Wechsel oder Austausch des Vorratsbehälters 51 erlaubt. Darüber hinaus sorgt die Eigenspannung des Spiralschlauchs 58 beim Wiedereinsetzen des Vorratsbehälters 51 für aufgeräumte Verhältnisse, d.h. der Schlauch 58 zieht sich selbständig auf die Aufhängung entsprechend der Darstellung auf der linken Seite von Fig. 15 zurück.

Die Förderung des Mundwassers 52 aus dem Vorratsbehälter 51 erfolgt über eine Pumpe 60, der ein Rückschlagventil 61 vorgeordnet ist, welches ein - aus hygienischen Gründen unerwünschtes - Rückfließen des Mundwassers 52 in den Vorratsbehälter 51 verhindert. Der Weg des Mundwassers 52 über die Zuführungsleitung 63 ist bis zur Ausgestelle 54 getrennt vom restlichen Wassersystem, welches aus einem Wasserreservoir 64 sowie einem entsprechenden Steuerungsventil 65 besteht, um keine ungewollten Beeinflussungen der beiden Flüssigkeiten zu erhalten.

Je nach Bedarf kann nun entweder ausschließlich Wasser, Mundwasser oder eine Mischung beider Flüssigkeiten abgegeben werden. Ferner kann optional mittels einer Sensoreinrichtung 62, 62a eine Überwachung des Füllstands bzw. eine Leeranzeige vorgesehen sein, mit deren Hilfe automatisch erkannt wird, ob aus dem Vorratsbehälter 51 noch Mundwasser 52 gefördert werden kann oder nicht. Wie auch bei den anderen Komponenten des erfindungsgemäßen Fluid-Centers ist dann vorgesehen, dass das Personal automatisch informiert wird, sobald der Behälter 51 leer ist.

Eine andere Erweiterung der dritten Versorgungs-Komponente 50 besteht in einer Sensoreinrichtung 66, die dazu vorgesehen ist, das durch die Leitung 63 geförderte Mittel zu identifizieren. Aufgabe dieses Sensors 66, der Bestandteil der Überwachungs-Einheit 90 der Versorgungseinrichtung 1 ist, ist es, sicherzustellen, dass ausschließlich Mundwasser zur Entnahmestelle gelangt, da das versehentliche Einleiten anderer Mittel möglicherweise fatale Auswirkungen haben könnte. Der Sensor 66 erkennt spezifische Eigenschaften der geförderten Flüssigkeit und unterbricht entweder eine weitere Förderung des Mittels oder übermittelt eine Warnmeldung, sollte eine falsche, also nicht vorgesehene Flüssigkeit durch die Zuführungsleitung 63 geleitet werden. Beispielsweise könnte das Vorliegen eines zulässigen Mittels über eine Leitfähigkeitsmessung, mittels Lichtbrechung, durch eine Konzentrationserkennung, Farberkennung oder eine Ionenerkennung erkannt werden.

Eine derartige Erweiterung mit chemischen, optischen oder elektrischen Sensoren zur Identifizierung des geförderten Betriebsmittels wäre selbstverständlich auch für die anderen Versorgungs-Komponenten des erfindungsgemäßen Fluid-Centers denkbar, da auch in den anderen Fällen sichergestellt werden muss, dass die tatsächlich vorgesehenen Mittel in den Vorratsbehältern verfügbar sind.

Eine andere Erweiterung, durch welche die Sicherheit bei der Bereitstellung der verschiedenen Betriebsstoffe erhöht wird, besteht darin, die zum Anschließen an die Vorratsbehälter vorgesehenen Kupplungselemente der Entnahmemittel, also z.B. den Anschlussadapter 17 der ersten Versorgungseinheit 10 oder die Abdeckung 56 der dritten Versorgungs-Einheit 50 derart auszugestalten, das jeweils ausschließlich der Vorratsbehälter mit dem geeigneten Betriebsmittel angeschlossen werden kann. Diese einfach Maßnahme, bei der jedem Vorratsbehälter-Typ ein individuelles Kupplungselement zugeordnet ist, kann bei sämtlichen Versorgungs-Einheiten der erfindungsgemäßen Versorgungseinrichtung zum Einsatz kommen und erhöht zusätzlich die Sicherheit des Systems, da das versehentliche falschen Anschließen eines Vorratsbehälters vermieden wird.

Die dritte Komponente des erfindungsgemäßen Fluid-Centers ermöglicht somit im Vergleich zur bisherigen Vorgehensweise eine automatisierte Zudosierung von Mundwasser, wobei gleichzeitig ergänzende Maßnahmen sicherstellen, dass eine richtige Dosierung erzielt wird und auch tatsächlich ausschließlich Mundwasser zur Abgabestelle 54 übermittelt wird. Ferner ist ein leichter Austausch des Vorratsbehälters für das Mundwasser ermöglicht, wobei die Entleerung des Behälters wiederum automatisch erkannt wird.

Für die vierte Versorgungs-Einheit 70 des erfindungsgemäßen Fluid-Centers schließlich wird nochmals auf Fig. 4 verwiesen. Aufgabe dieser Versorgungs-Einheit 70 ist es, ein Mittel zur Desinfektion von zu reinigenden Oberflächen des medizinischen oder zahnmedizinischen Arbeitsplatzes zur Verfügung zu stellen. Bislang wurden hierzu ausschließlich Pumpsprühflaschen eingesetzt, in welchen das Desinfektionsmittel vorhanden war, wobei dann ein Nutzer derartiger Flaschen durch Pumphübe das Desinfektionsmittel aus der Flasche über einen Zerstäuber auf die zu desinfizierenden Oberflächen von Hand sprühen musste.

Wiederum wird nunmehr eine automatisierte Zurverfügungsstellung des Mittels ermöglicht, was dadurch erreicht wird, dass in der Vorratsflasche 71 - ebenso wie bei der ersten Versorgungs-Einheit 10 - ein Saugschlauch angeordnet ist. Dieser endet wiederum mit dem einen offenen Ende am Anschlussadapter des Systems und mit dem anderen Ende am Boden des Vorratsbehälters an der tiefsten Stelle. Der Schlauch kann vorzugsweise wellig oder schräg angeschnitten sein, um ein Dichtwerden durch Anliegen an der Wand des Behälters zu verhindern.

Der Anschlussadapter enthält - ebenso wie im Zusammenhang mit der ersten Versorgungs-Einheit 10 erläutert wurde - ein federndes Dichtelement zum sicheren Abdichten des Sauganschlusses am Anschluss. Vorzugsweise ist der Adapter wiederum schwenkbar gelagert und federnd adaptiert, um einen einfachen Austausch des Vorratsbehälters 71 zu ermöglichen.

Das in dem Vorratsbehälter 71 befindliche Desinfektionsmittel 72 wird nunmehr über einen Druckschlauch 73 an eine am Ende des Schlauchs 73 befindliche Sprühdüse 74 weitergeleitet, die mittels einem geeigneten Betätigungselement aktiviert werden kann. Mit Hilfe einer Pumpe, bspw. einer Schwingankerpumpe, welche beim Entnehmen des Schlauchs 73 aus einer Ablage automatisch aktiviert wird, wird der Druckschlauch 73 unter Druck gesetzt. Durch einfaches Drücken des Betätigungselements wird dann das Desinfektionsmittel über die Sprühdüse 74 abgegeben. Die erfindungsgemäße Lösung gestattet mit Hilfe der Pumpe eine konstante Abgabe des Desinfektionsmittels 72, so dass wiederum eine sehr vereinfachte Handhabung des Systems ermöglicht wird.

Insgesamt gesehen wird somit eine Vorrichtung zur Versorgung eines medizinischen oder zahnmedizinischen Arbeitsplatzes mit unterschiedlichsten Flüssigkeiten geschaffen, welche derart ausgestaltet ist, dass die Flüssigkeiten entsprechend ihren Einsatzgebieten in geeigneter Weise und zuverlässig zur Verfügung gestellt werden. Durch geeignete Maßnahmen ist dabei sichergestellt, dass tatsächlich auch nur die gewünschten Mittel in einer genauen Dosierung zur Verfügung gestellt werden. Auch ein Wechsel der die verschiedenen Mittel enthaltenden Vorratsbehälter ist besonders einfach gestaltet.

## Patentansprüche

1. Versorgungseinrichtung (1) für einen medizinischen, insbesondere einen zahnmedizinischen Arbeitsplatz (100, 100a-100e), mit
• mindestens zwei Vorratsbehältern (11, 31, 51, 71) mit flüssigen Betriebsstoffen (12, 32, 52, 72), die zur Verwendung an dem Arbeitsplatz vorgesehen sind, sowie
• Entnahmemitteln und Zuführungsmitteln zur Entnahme der Betriebsstoffe (12, 32, 52, 72) aus den Vorratsbehältern (11, 31, 51, 71) sowie zur Bereitstellung an Bedarfsorten (14, 34, 54, 74) des Arbeitsplatzes (100, 100a-100e),
wobei es sich bei den Betriebsstoffen um unterschiedliche Betriebsstoffe handelt und wobei die Versorgungseinrichtung (1) mit mehreren medizinischen bzw. zahnmedizinischen Behandlungseinheiten (100a-100e) verbunden ist,
**dadurch gekennzeichnet,**
**dass** ein Verteilungsblock (2) für die gleichzeitige Verteilung der unterschiedlichen Betriebsstoffe (12, 32, 52, 72) an die Behandlungseinheiten (100a-100e) vorgesehen ist und
**dass** durch die Entnahmemittel und Zuführungsmittel jeder der Vorratsbehälter jeweils mit jeder der Behandlungseinheiten (100a-100e) verbunden ist.

2. Versorgungseinrichtung nach Anspruch 1,
**dadurch gekennzeichnet,**
**dass** diese einem einzelnen medizinischen bzw. zahnmedizinischen Arbeitsplatz (100, 100a-100e) zugeordnet ist.

3. Versorgungseinrichtung nach Anspruch 1,
**dadurch gekennzeichnet,**
**dass** diese mit mehreren medizinischen bzw. zahnmedizinischen Arbeitsplätzen (100, 100a-100e) verbunden ist.

4. Versorgungseinrichtung nach einem der vorherigen Ansprüche,
**dadurch gekennzeichnet,**
**dass** die Entnahmemittel Kupplungselemente (17, 56) zum Anschließen an die Vorratsbehälter (11, 31, 51, 71) aufweisen.

5. Versorgungseinrichtung nach Anspruch 4,
**dadurch gekennzeichnet,**
**dass** jedem Vorratsbehälter-Typ ein individuelles Kupplungselement (17, 56) zugeordnet ist.

6. Versorgungseinrichtung nach Anspruch 4 oder 5,
**dadurch gekennzeichnet,**
**dass** das Kupplungselement (17, 56) ein Entgasungselement aufweist.

7. Versorgungseinrichtung nach einem der vorherigen Ansprüche,
**dadurch gekennzeichnet,**
**dass** die Zuführungsmittel einen Druckschlauch (75) aufweisen, an dessen Ende eine Sprühdüse (74) sowie ein Betätigungselement zum Aktivieren der Sprühdüse (74) angeordnet sind.

8. Versorgungseinrichtung nach Anspruch 7,
**dadurch gekennzeichnet,**
**dass** in dem Druckschlauch (75) ein Pumpe (73) zur Druckbeaufschlagung angeordnet ist.

9. Versorgungseinrichtung nach Anspruch 8,
**dadurch gekennzeichnet,**
**dass** die Pumpe (73) bei Entnahme des Druckschlauchs (75) aus einer Ablagevorrichtung automatisch aktiviert wird.

10. Versorgungseinrichtung nach einem der Ansprüche 1 bis 6,
**dadurch gekennzeichnet,**
**dass** die Zuführungsmittel einen Zwischenbehälter (20, 40) zur Zwischenlagerung des Betriebsstoffs (12, 32, 52, 72) aufweisen.

11. Versorgungseinrichtung nach Anspruch 10,
**dadurch gekennzeichnet,**
**dass** der Zwischenbehälter (20, 40) über einen Entlüftungsschlauch (22) mit dem Vorratsbehälter (11, 31, 51, 71) verbunden ist.

12. Versorgungseinrichtung nach Anspruch 10 oder 11,
**dadurch gekennzeichnet,**
**dass** eine Pumpe (21, 44) zum Befüllen des Zwischenbehälters (20, 40) vorgesehen ist.

13. Versorgungseinrichtung nach Anspruch 12,
**dadurch gekennzeichnet,**
**dass** der Zwischenbehälter (20, 40) einen die Pumpe (21, 44) ansteuernden und den Füllstand des Zwischenbehälters (20, 40) erfassenden Sensor (25) zur automatisierten Nachfüllung des Betriebsstoffes aufweist.

14. Versorgungseinrichtung nach einem der vorherigen Ansprüche,
**dadurch gekennzeichnet,**
**dass** diese Sensoren (66) zur Identifizierung der sich in den Vorratsbehältern (11, 31, 51, 71) befindenden bzw. durch die Zuführungsmittel geförderten Betriebsstoffe (12, 32, 52, 72) aufweist.

15. Versorgungseinrichtung nach einem der vorherigen Ansprüche, **gekennzeichnet durch**
Sensoren zur Erfassung des Füllstände der Vorratsbehälters (11, 31, 51, 71).

## Claims

1. A supply arrangement (1) for a medical, in particular a dental-medical work station (100, 100a-100e), having
• at least two storage containers (11, 31, 51, 71) with fluid working materials (12, 32, 52, 72) which are provided for use at the work station, and also
• withdrawal means and delivery means for withdrawal of the working materials (12, 32, 52, 72) out of the storage containers (11, 31, 51, 71) and for provision at places of need (14, 34, 54, 74) of the work station (100, 100a-100e),
wherein the working materials are different working materials, and
wherein the supply arrangement (1) is connected to a plurality of medical or dental-medical treatment units (100, 100a-100e),
**characterised in that**
a distribution block (2) is provided for the simultaneous distribution of the different working materials (12, 32, 52, 72) to the treatment units (100a-100e), and
**in that** by means of the withdrawal means and delivery means each of the storage containers is connected, in each case, to each of the treatment units (100a-100e).

2. A supply arrangement according to claim 1,
**characterised in that**
this is associated with an individual medical or dental-medical work station (100, 100a-100e).

3. A supply arrangement according to claim 1,
**characterised in that**
this is connected to a plurality of medical or dental-medical work stations (100, 100a-100e).

4. A supply arrangement according to one of the preceding claims,
**characterised in that**
the withdrawal means have coupling elements (17, 56) for connection to the storage containers (11, 31, 51, 71).

5. A supply arrangement according to claim 4,
**characterised in that**
an individual coupling element (17, 56) is associated with each type of storage container.

6. A supply arrangement according to claim 4 or 5,
**characterised in that**
the coupling element (17, 56) has a de-gassing element.

7. A supply arrangement according to one of the preceding claims,
**characterised in that**
the delivery means have a pressure hose (75), arranged at the end of which there are a spray nozzle (74) and also an actuating element for the activation of the spray nozzle (74).

8. A supply arrangement according to claim 7,
**characterised in that**
arranged in the pressure hose (75) there is a pump (73) for applying pressure.

9. A supply arrangement according to claim 8,
**characterised in that**
that upon withdrawal of the pressure hose (75) from a repository device, the pump (73) is automatically activated.

10. A supply arrangement according to one of claims 1 to 6,
**characterised in that**
the delivery means have an intermediate container (20, 40) for intermediate storage of the working material (12, 32, 52, 72).

11. A supply arrangement according to claim 10,
**characterised in that**
the intermediate container (20, 40) is connected to the storage container (11, 31, 51, 71) by way of a ventilation hose (22).

12. A supply arrangement according to claim 10 or 11,
**characterised in that**
a pump (21, 44) is provided for filling the intermediate container (20, 40).

13. A supply arrangement according to claim 12,
**characterised in that**
the intermediate container (20, 40) has, for automated refilling of the working material, a sensor (25) detecting the filling level of the intermediate container (20, 40) and controlling the pump (21, 44).

14. A supply arrangement according to one of the preceding claims,
**characterised in that**
this has sensors (66) for the identification of the working materials (12, 32, 52, 72) located in the storage containers (11, 31, 51, 71) or conveyed through the delivery means.

15. A supply arrangement according to one of the preceding claims,
**characterised by**
sensors for the detection of the filling levels of the storage containers (11, 31, 51,71).

## Revendications

1. Dispositif d'alimentation (1) pour un poste de travail (100, 100a - 100e) médical, en particulier dentaire, comprenant
- au moins deux réservoirs (11, 31, 51, 71) avec des combustibles (12, 32, 52, 72) liquides, qui sont prévus pour être utilisés au niveau du poste de travail, ainsi que
- des moyens de retrait et des moyens d'amenée servant à retirer les combustibles (12, 32, 52, 72) hors des réservoirs (11, 31, 51, 71) ainsi que servant à approvisionner à des emplacements de nécessité (14, 34, 54, 74) du poste de travail (100, 100a - 100e),
dans lequel les combustibles sont des combustibles différents et
dans lequel le dispositif d'alimentation (1) est relié à plusieurs unités de traitement (100a - 100e) médicales ou dentaires,
**caractérisé en ce**
**qu'**est prévu un bloc de répartition (2) pour la répartition simultanée des différents combustibles (12, 32, 52, 72) sur les unités de traitement (100a - 100e), et
**que** chacun des réservoirs est relié respectivement à chacune des unités de traitement (100a - 100e) par les moyens de retrait et les moyens d'amenée.

2. Dispositif d'alimentation selon la revendication 1,
**caractérisé en ce**
**que** ledit dispositif d'alimentation est associé à un poste de travail (100, 100a - 100e) individuel médical ou dentaire.

3. Dispositif d'alimentation selon la revendication 1,
**caractérisé en ce**
**que** ledit dispositif d'alimentation est relié à plusieurs postes de travail (100, 100a - 100e) médicaux ou dentaires.

4. Dispositif d'alimentation selon l'une quelconque des revendications précédentes,
**caractérisé en ce**
**que** les moyens de retrait présentent des éléments de couplage (17, 56) pour un raccordement aux réservoirs (11, 31, 51, 71).

5. Dispositif d'alimentation selon la revendication 4,
**caractérisé en ce**
**qu'**un élément de couplage (17, 56) individuel est associé à chaque type de réservoir.

6. Dispositif d'alimentation selon la revendication 4 ou 5,
**caractérisé en ce**
**que** l'élément de couplage (17, 56) présente un élément de dégazage.

7. Dispositif d'alimentation selon l'une quelconque des revendications précédentes,
**caractérisé en ce**
**que** les moyens d'amenée présentent un tube de pression (75), au niveau de l'extrémité duquel une buse de pulvérisation (74) ainsi qu'un élément d'actionnement servant à activer la buse de pulvérisation (74) sont disposés.

8. Dispositif d'alimentation selon la revendication 7,
**caractérisé en ce**
**qu'**une pompe (73) servant à appliquer une pression est disposée dans le tuyau flexible de pression (75).

9. Dispositif d'alimentation selon la revendication 8,
**caractérisé en ce**
**que** la pompe (73) est automatiquement activée lors du retrait du tuyau flexible de pression (75) hors d'un système de dépôt.

10. Dispositif d'alimentation selon l'une quelconque des revendications 1 à 6,
**caractérisé en ce**
**que** les moyens d'amenée présentent un contenant intermédiaire (20, 40) servant à entreposer de manière temporaire le combustible (12, 32, 52, 72).

11. Dispositif d'alimentation selon la revendication 10,
**caractérisé en ce**
**que** le contenant intermédiaire (20, 40) est relié au réservoir (11, 31, 51, 71) par l'intermédiaire d'un tuyau flexible d'aération (22).

12. Dispositif d'alimentation selon la revendication 10 ou 11,
**caractérisé en ce**
**qu'**une pompe (21, 44) est prévue pour remplir le contenant intermédiaire (20, 40).

13. Dispositif d'alimentation selon la revendication 12,
**caractérisé en ce**
**que** le contenant intermédiaire (20, 40) présente un capteur (25) pilotant la pompe (21, 44) et détectant le niveau de remplissage du contenant intermédiaire (20, 40) servant à la recharge automatique en combustible.

14. Dispositif d'alimentation selon l'une quelconque des revendications précédentes,
**caractérisé en ce**
**que** ledit dispositif d'alimentation présente des capteurs (66) servant à identifier les combustibles (12, 32, 52, 72) se trouvant dans les réservoirs (11, 31, 51, 71) ou refoulés par les moyens d'amenée.

15. Dispositif d'alimentation selon l'une quelconque des revendications précédentes,
**caractérisé par**
des capteurs servant à détecter le niveau de remplissage des réservoirs (11, 31, 51, 71).
